# EUROPEAN PATENT APPLICATION

(11) **EP 3 705 319 A1**
(43) Date of publication of application: **09.09.2020**
(21) Application number: 20160635.7
(22) Date of filing: 03.03.2020
(51) Int. Cl.: B60G 7/00

(54) **SUSPENSION ASSEMBLY WITH A DAMPER FOR AN ELECTRIC BUS**

(30) Priority: 04.03.2019 LU 101143
(71) Applicant: Alpha EC Industries 2018 S.à r.l., 1661 Luxembourg (LU)
(72) Inventor: Hallundbæk, Jørgen, 1661 Luxembourg (LU)
(74) Representative: Rousseau, Cyrille

(57) **Abstract**

The invention provides an articulated low platform bus with a suspension assembly (34) in a wheel housing. The suspension assembly (34) comprises: a wheel support (54) such as a steering knuckle, an upper link part of a parallelogram suspension and pivotably joined to the wheel support (54), a damping device (64) adapted for absorbing energy and disposed in the parallelogram, a lower link (35) comprising a portion of reduced thickness (66) and two transversal branches (68), one of the two transversal branches (68) being vertically thicker than the portion of reduced thickness and joining transversally the portion of reduced thickness (66) to the damping device (64). The invention also provides a bus assembling process.

## Description

### Technical field

The invention lies in the field of suspension assemblies for road vehicles. More precisely, the invention provides a suspension assembly with a shock absorber for a passenger vehicle. The invention also provides a vehicle such as an articulated low platform bus, and a bus assembling process.

### Background of the invention

High capacity vehicles such as articulated buses are equipped with suspension assemblies in order to improve the passenger comfort. A suspension assembly with a damping device such as a shock absorber filters vibrations and controls oscillations of the swinging arms. Through this aspect, the damping device improves the contact between the wheel and the road. This advantage may be applied to driving wheels and to steering wheels. In curves and in braking situations, the wheels keep a homogeneous contact which reduces sideslip situations. Then, braking distances may be reduced, and turning radius may be respected as predefined. Thus, safety is provided due to the road handling. Last but not least, the perceived quality is improved since the noise is reduced, and vibrations felt by passengers - standing and sitting ones - varnish.

The document US2007/0018419 A1 discloses a wheel suspension arm mounting structure of a vehicle. It includes a lower suspension arm with two branches, namely a front member and a rear member, which are coupled to each other by a king pin support boss with a plate shape.

The document DE 28 35 865 A1 discloses a bus with a least six wheels. The wheels are connected to the chassis by means of pairs of arms. Gas springs and dampers are attached to the upper arms and to lower arms respectively.

### Technical problem to be solved

It is an objective of the invention to present a suspension assembly, which overcomes at least some of the disadvantages of the prior art. The invention intends to improve the strength and the compactness of a suspension assembly.

### Summary of the invention

According to a first object of the invention a bus with a suspension assembly is provided. The suspension assembly comprising: a transversal direction, a transversal wheel rotation axis, a wheel support for a wheel, an upper link pivotably joined to the wheel support, a damping device adapted for absorbing energy, a lower link comprising a portion of reduced thickness and two transversal branches, at least one of the two transversal branches being vertically thicker than the portion of reduced thickness and joining transversally the portion of reduced thickness to the damping device.

Preferably, the portion of reduced thickness comprises a plate and the transversal branches comprises two hollow rods
Preferably, the two transversal branches are longitudinally distant from each other and longitudinally joined by the portion of reduced thickness, the lower link comprising a vertical passage between the two transversal branches.
Preferably, the upper link comprises a longitudinal pivot axis which is across the damping device, preferably the damping device comprises an upper joint through which said longitudinal pivot axis is disposed. The current arrangement improves compactness. The damping effect is more gradual.
Preferably, each of the two transversal branches is transversally longer than the portion of reduced thickness, and the portion of reduced thickness is longitudinally thicker than each of the two transversal branches.
Preferably, the suspension assembly comprises a wheel with a rim comprising an inner space in which the portion or reduced thickness is, at least partially, disposed.
Preferably, the suspension assembly comprises an electric engine adapted for rotating the wheel about the transversal wheel rotation axis, optionally said electric engine is vertically level with the damping device, the electric engine notably being an in-wheel engine.
Preferably, the portion of reduced thickness extends transversally along the whole electric engine, or along a portion of the electric engine.
Preferably, the damping device comprises lower fixation means joined to the transversal branches, and/or the portion of reduced thickness and the wheel support are joined by a ball joint notably disposed through the portion of reduced thickness.
Preferably, the lower link comprises an outer half joined to the wheel support, and an inner half joined to the damping device, said inner half being notably formed by the transversal branches, optionally totally formed by the transversal branches.
Preferably, the damping device comprises a tubular body projecting between the lower link and the upper link, and the damping device being a gas damper or an oil damper.
Preferably, the transversal branches comprise transversal notches in which the portion of reduced thickness is fixed, the lower link notably comprises a center and a central segment at said center which extends on at most the half of the lower link, the portion of reduced thickness and the transversal branches overlapping each other in said central segment.
Preferably, the suspension assembly comprises a hollow space around the damping device and extending at least on the half of the height of said damping device.
Preferably, the suspension assembly comprises a gas spring, notably a gas actuator, which is joined to the upper link, the suspension assembly comprises a separation, notably a transversal separation, between the gas spring, respectively the gas actuator, and the damping device.

Preferably, the upper link comprises an upper portion of reduced thickness to which the wheel support is pivotably linked, and two upper transversal branches extending from the upper portion of reduced thickness; the upper link and the lower link define a parallelogram.
Preferably, the lower link comprises two inboard pivot joints.
Preferably, at least one of the two transversal branches extend transversally along at least the half of said lower link.
Preferably, the plate is a solid plate.
Preferably, the transversal wheel rotation axis is disposed through the wheel support.
Preferably, the upper link and the lower link are similar.
each transversal inner end of the transversal branches of the lower link and/or of the upper link comprises a pivot joint.
Preferably, the damping system is joined to the lower link transversally at distance from the portion of reduced thickness.
Preferably, the rotation axis of the wheel is vertically between the upper link and the lower link.
Preferably, the rotation axes of the electric engine and of the wheel are colinear.
Preferably, the electric engine is disposed vertically between the upper link and the lower link.
Preferably, the electric engine faces transversally the damping device, notably between the upper link and the lower link.
Preferably, the lower link comprises a lower face and an upper face, the wheel support and the damping device protruding on the upper face.
Preferably, the transversal branches are each inclined with respect to the transversal direction.
Preferably, the damping device is disposed in the parallelogram.
Preferably, the wheel support is a knuckle, notably a steering knuckle.
Preferably, the suspension assembly comprises a steering actuator coupled to the wheel support, respectively to the steering knuckle.
Preferably, at least one of the branches of the upper link and at least one of the branches of the lower link define a parallelogram.
Preferably, the portion of reduced thickness of the upper link and the portion of reduced thickness of the lower link define a parallelogram.
Preferably, the portion of reduced thickness transversally overlaps the electric engine.
Preferably, the notches transversally overlap the electric engine.
Preferably, the portion of reduced thickness protrudes from the inner space, and/or comprises an inner portion outside the inner space, respectively the wheel.
Preferably, the portion of reduced thickness transversally extends over a majority of the engine.
Preferably, the central segment exhibits a constant thickness along the vertical direction.
Preferably, the engine is an in-wheel engine extending within the wheel and transversally protruding from the wheel toward the damping device.

It is another object of the invention to provide a suspension assembly for a vehicle, the assembly comprising: a transversal axis; a damping device adapted for absorbing energy; a wheel support intended to receive a wheel rotating about the transversal axis; a lower link comprising a portion of reduced thickness attached to the wheel support, and two branches vertically thicker than the portion of reduced thickness and attached to the damping device and/or at least one of the two transversal branches being attached to the damping device.
It is another object of the invention to provide a suspension assembly for a vehicle, the assembly comprising: a transversal axis; a damping device; a wheel support intended to receive a wheel rotating about the transversal axis; a lower link comprising a plate attached to the wheel support and to transversal branches extending from the plate and being thicker than said plate, the damping device being attached to one of the transversal branches.
It is another object of the invention to provide a suspension assembly for a vehicle, the assembly comprising: a transversal axis; a damping device; a wheel support intended to receive a wheel rotating about the transversal axis; a lower link with a plate connecting two transversal branches; wherein at least one of the two transversal branches is vertically thicker than the plate and joining transversally the damping device to the plate.
The bus is not an essential aspect of the invention.
It is another object of the invention to provide a suspension assembly for a vehicle, notably a bus, the suspension assembly comprising: a transversal direction, a transversal wheel rotation axis, a wheel support for a wheel, an upper link pivotably joined to the wheel support, a damping device adapted for absorbing energy, a lower link comprising a portion of reduced thickness and two transversal branches, at least one of the two transversal branches being vertically thicker than the portion of reduced thickness and joining transversally the portion of reduced thickness to the damping device, an engine adapted for rotating a wheel about the transversal wheel rotation axis, the portion of reduced thickness extending transversally along at least a majority, or the whole engine.

It is another object of the invention to provide a suspension assembly for a vehicle, notably a bus, the suspension assembly comprising: a transversal direction, a transversal wheel rotation axis, a wheel support for a wheel, an electric engine, an upper link pivotably joined to the wheel support, a damping device adapted for absorbing energy, a lower link comprising a portion of reduced thickness and two transversal branches; at least one of the two transversal branches being optionally vertically thicker than the portion of reduced thickness, and joining transversally the portion of reduced thickness to the damping device; said portion of reduced thickness transversally overlapping the electric engine.

It is another object of the invention to provide a bus, notably an articulated bus, the bus comprising a suspension assembly in accordance with the invention, the suspension assembly being configured such that the transversal wheel rotation axis is movable, at least between an upper position and a lower position with respect to the chassis frame; preferably the bus comprises several units with identical suspension assemblies.
Preferably, the suspension assembly is a first suspension assembly, the bus further comprising a second suspension assembly, and a passenger platform between the first suspension assembly and the second suspension assembly which projects transversally over at least the half of the width of the bus.
Preferably, the bus comprises a wheel housing in which the suspension assembly is disposed Preferably, the bus comprises a passenger capacity of at least one hundred passengers.

It is another object of the invention to provide a bus assembly process, the bus notably being a low platform bus, the bus assembling process comprising the steps of: providing a chassis frame for the bus, joining an upper link to the chassis frame; providing a wheel support, joining a damping device to the chassis frame; providing a lower link comprising two transversal branches and a portion of reduced thickness which is thinner than the transversal branches, joining the chassis frame to the wheel support and the damping device through the portion of reduced thickness and the transversal branches respectively; the upper link the lower link, the wheel support and the damping device notably forming a suspension assembly in accordance with the invention, and/or the bus being in accordance with the invention.
Preferably, the wheel support is joined to the portion of reduced thickness before the damping device is joined to at least one of the two transversal branches.
Preferably, the damping device and the upper link are joined to the chassis frame before the wheel support is joined to the upper link and the lower link, and/or the damping device and the upper link are joined to the chassis frame at the same time and/or together.
Preferably, the assembling process comprises fixing a wheel to the wheel support after fixing an engine to the wheel support.
The bus assembling process may generally be an assembling process.

The different objects of the invention may be combined to each other. In addition, the preferable features of each object of the invention may be combined with the other objects of the invention, unless the contrary is explicitly mentioned.

### Technical advantages of the invention

The invention provides a first technical advantage on the compacity of the suspension assembly by providing an optimized lower link. Indeed, the arrangement of the transversal branches and of the portion of reduced thickness copes with the available place in the wheels and bending stresses. The branches and the portion may have similar stiffnesses, however their shapes are adapted to their dedicated space. The weight distribution is optimised in order to limit the unbalanced weights.

In addition, the invention allows a cost reduction since the upper link and the lower link are similar. Thus, a single link model may be used for the whole bus model. The invention also promotes cooling of the damping device, which is notably relevant where an in-wheel electric engine faces said damping device. The position of the portion of reduced thickness along the engine improves the compactness, and optimizes the use of space. More place is available for the vertical swinging motions of the engine.

Moreover, the suspension assembly remains easy to assemble in a narrow wheel housing. Inspection and mounting remain user friendly.

### Brief description of the drawings

Several embodiments of the present invention are illustrated by way of figures, which do not limit the scope of the invention, wherein
- figure 1 provides a schematic illustration of a side view of a bus in accordance with a preferred embodiment of the invention;
- figure 2 provides a schematic illustration of an aerial view of a portion of a chassis frame in accordance with a preferred embodiment of the invention;
- figure 3 provides a schematic illustration of side view of a wheel housing of a bus in accordance with a preferred embodiment of the invention;
- figure 4 provides a schematic illustration of a longitudinal view of a suspension assembly in accordance with a preferred embodiment of the invention;
- figure 5 provides a schematic illustration of a top view of a suspension assembly in accordance with a preferred embodiment of the invention;
- figure 6 provides a schematic illustration of a longitudinal view of a suspension assembly in accordance with a preferred embodiment of the invention;
- figure 7 provides a schematic illustration of a bus assembling prosses in accordance with a preferred embodiment of the invention.

### Detailed description of the invention

This section describes the invention in further detail based on preferred embodiments and on the figures. Similar reference numbers will be used to describe similar or the same concepts throughout different embodiments of the invention.
It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the bus in accordance with the invention is evidently controlled by a computer, even though such a computer is not explicitly referenced on the figures nor referenced in the description.
By way of convention, it may be defined that the word "longitudinal" refers to the longitudinal direction and may correspond to the main driving direction of the bus. It may be along the main central axis of the vehicle. The word "transversal" refers to the transversal direction and may be perpendicular to the longitudinal direction. It may be understood that the directions are not used in a strict meaning. Indeed, each direction used below may include a variation of at most: 5°, or 2°, or 1°, with respect to a strict meaning. The skilled in the art will understood that a longitudinal pivot axis may be inclined with respect to the longitudinal direction of the bus and/or the horizontal direction.
In the following description and claims, the mentioned length(s), width(s), and thickness(es) may be average ones.
It should be noticed that the present drawings generally provide configurations where wheels are substantially parallel to the longitudinal direction. The steering angle is of 0°. The vehicle may drive along a straight trajectory. However, the skilled in the art will be able to adapt the following teaching to situations where the steering angle of the bus is changed.

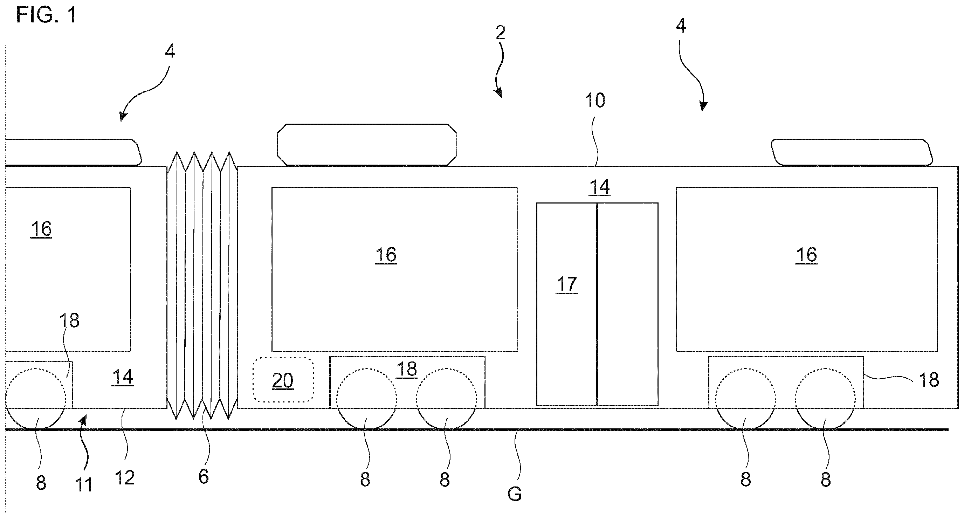

Figure 1 shows a vehicle for mass transportation in accordance with a preferred embodiment of the invention. The vehicle is partially represented.
The vehicle is adapted for transportation of passengers in cities and may transport about one hundred passengers, for instance one hundred and twenty passengers. The vehicle may be a bus 2, notably an electric bus 2. The bus 2 may include electric driving engines and electric batteries (not represented) powering the electric driving engines. The bus 2 may be purely electric, in the meaning that it is free of combustion engine.
The bus 2 may be an articulated bus. It may comprise a first unit 4 and a second unit 4 (partially represented). Each unit 4, may form a body, and/or may form a rigid element. Each unit 4 may be a trailer and/or a tractor. The units 4 may be similar or identical. These units 4 may be joined by a connection, for instance a hinged connection 6 enabling the units 4 to swivel with respect to each other.
In the current embodiment, only two units 4 are represented, however it is contemplated in the current invention that the electric bus 2 includes three, four, or more units 4; which are articulated with respect to one another by hinged connection(s) 6. Then, the passenger capacity may be of more than two hundred. Each unit 4 may be self-supporting. Thus, each unit 4 may move without the hinged connection 6.
A bus formed of a single unit is also considered in the invention.

Each unit 4 may include several wheels 8 engaging the ground G. Pairs of symmetric wheels 8 may form axles, for instance four axles for each unit 4. The axles and thus the wheels 8 may be distributed along the length of the bus 2. At least one pair of wheels is formed of steered wheels. Optionally, each wheel 8 of the bus 2 or of at least one unit 4 are steered wheels and/or driving wheels. The roof 10 may support an air conditioning system, and other systems as well.
The bus 2 may include a bus structure, notably a chassis frame 11. The chassis frame 11 may distribute and/or support the weight of the bus, and load therein. The chassis frame 11 may include a roof 10, and/or a passenger platform 12, and/or side walls 14. The side walls 14 may be outer walls. Two transversally opposite side walls 14 may go down from the roof 10 to the passenger platform 12. They may form the bodywork of the bus 2. They may cover transversally the wheels 8. The bodywork may be part of the bus structure. The side walls 14 may receive windows 16 and doors 17 for passengers. Optionally, doors 17 are arranged in one of the two side walls 14, notably between windows 16.
For instance; the side walls 14 may close the wheel housings 18. Optionally, at least one or each wheel housing 18 may receive two longitudinally spaced wheels 8. The wheel housings 18 may form downwardly open boxes. The wheel housings 18 may be longitudinally at distance from the ends of the units 4. The wheel housings 18 may be arranged below the windows 16. The door 17 may be disposed between two wheel housings 18 of the corresponding unit 4.
Generally, the or each wheel housing 18 may be understood a space in which at least one wheel is arranged. The or each wheel housing 18 may be a wheel cavity. The or each wheel housing 18 may be a wheel guard.
The bus 2 may comprise a gas supply 20.

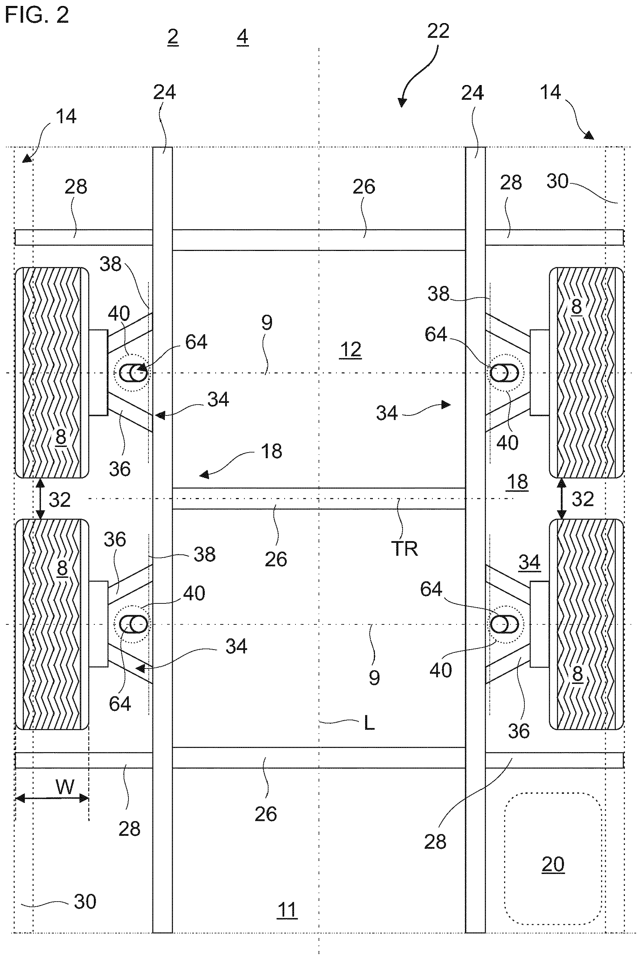

Figure 2 provides an aerial illustration of the under structure 22 of the chassis frame 11 of a bus 2, or from a unit 4 in accordance with a preferred embodiment of the invention. The longitudinal central axis L and the transversal direction TR are represented. The longitudinal central axis L may correspond to the longitudinal direction L, and may be horizontal.
The bus 2 and/or the unit 4 may correspond to those as described in relation with figure 1. Two pairs or wheels 8 are disposed in respective wheel housings 18. The rotations axes 9 of the wheel are represented. The wheel rotations axes 9 may correspond to the axles when the wheels 8 are aligned at each side. It may be understood that the wheels 8 comprise toe-in or toe-out. Thus, the term "aligned" may be understood in the meaning of the environment of the invention.
The under structure 22 may form the platform 12 of the bus 2. The platform 12 may be a passenger platform, and may include a passenger floor on which the passengers (not represented) may stand and walk. The chassis frame 11, notably the under structure 22, may comprise longitudinal beams, notably lower longitudinal beams 24. The longitudinal beams, and possibly the lower longitudinal beams 24, may extend on the whole length of the unit 4, or at least on majority of the length of the unit 4. The lower longitudinal beams 24 may delimit the wheel housings 18.
The chassis frame 11, notably the under structure 22, may comprise transversal beams 26. The transversal beams 26 project from one lower longitudinal beam 24 to the opposite lower longitudinal beam 24.
The wheel housings 18 may comprise transversal bars 28. The transversal bars 28 may form the longitudinal ends of the wheel housings 18. The wheel housings 18 may further comprise upper longitudinal beams 30 at their transversal outer end. These upper beams 30 may form the side walls 14.
At least one wheel 8 is disposed in at least one wheel housing 18. At least one or each wheel housing 18 encloses two wheels 8. The wheels 8 may be received by pairs in the wheel housings 18. The wheels 8 of each pair are adapted to run on the same wheel path. These wheels 8 may be transversally aligned. In each pair, the wheels 8 are longitudinally offset. A longitudinal distance 32 may separate them. The longitudinal distance 32 may be shorter than the transversal width W of the wheels 8. The wheels 8 of each pair may be identical.
The width of the bus may be of about 2,5 m. Along and/or between the wheel housings 18, the passenger platform 12 may extend at least on the half of the width of the bus 2. At least one or each wheel housing 18 may extend on at most the quarter of the width of the bus 2. This feature eases longitudinal circulation within the passenger compartment, and allows two pushchairs to cross each other between the wheel housings 18. It also provides the technical effect of strengthening the platform 12.
The bus may comprise at least one suspension assembly 34, possibly several suspension assemblies 34. The suspension assemblies 34 may be independent from each other mechanically. Each suspension assembly 34 may connect one of the wheels 8 to the chassis frame 11, and/or to the corresponding wheel housing 18. Each wheel 8 may be independently linked to its wheel housing 18.
At least one or each suspension assembly 34 may comprise one or several links. In at least one or in each suspension assembly 34 the links may be parallel. The links may be pivotably linked to the longitudinal beams, for instance to the lower longitudinal beams 24. The links may be pivoting links. The links may be swinging arms. The links may essentially project transversally.
In at least one or in each suspension assembly 34 the links may comprise a lower link (not represented) and an upper link 36 over the lower link. The upper links 36 may pivot about upper longitudinal pivot axes 38. The upper links 36 and the lower links may be identical. In the current top view, each upper link 36 may mask the associated lower link.
At least one or each suspension assembly 34 may comprise an actuator, notably a gas actuator 40. The gas actuators 40 may be joined to the upper links 36. The gas actuators 40 may be in contact of the upper links 36. The gas actuators 40 may comprise gas springs. The gas actuators may be in fluid communication with the gas supply 20. The gas supply 20 may be arranged along one of the wheel housings 18.
At least one or each suspension assembly 34 may comprise a damping device 64. Each damping device 64 may be mechanically coupled to the chassis frame 11. At least one or each damping device may be mechanically coupled to a lower link (not represented). At least one or each lower link comprises a portion of reduced thickness and two transversal branches. At least one or each transversal branch may be vertically thicker than the portion of reduced thickness and joining transversally the portion of reduced thickness to the damping device. The portions of reduced thickness may enter the wheels 8, and the transversal branches may remain outside the wheels 8, thus allowing a wheel size reduction while maintaining an important wheel vertical displacement.

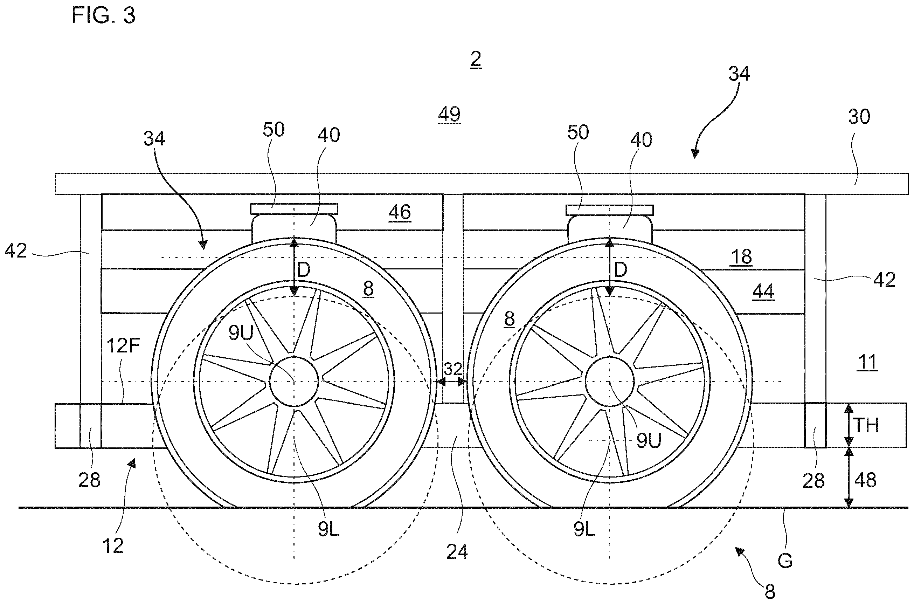

Figure 3 provides a schematic illustration of a side view of a bus portion in accordance with a preferred embodiment of the invention. The current side view may correspond to a side view of figure 2. The side view is centred on a wheel housing 18 within a chassis frame 11. The wheel housing 18 may correspond to those as described in relation with any one of figures 1 and 2.
The wheel housing 18 receives two wheels 8 which may be below the upper longitudinal beam 30. The wheel housing 18 may comprise vertical bars 42, which may project from the transversal bars 28.
The lower longitudinal beam 24 may be a first longitudinal beam 24. The wheel housing 18, and more generally, the chassis frame 11, may further comprise a second longitudinal beam 44 and a third longitudinal beam 46. The second longitudinal beam 44 may be between the first longitudinal beam 24 and the third longitudinal beam 46. These three longitudinal beams may be parallel. They may be above one another. They may define an inboard wall of the wheel housing 18. The third longitudinal beam 46 may be the uppermost longitudinal beam of the wheel housing 18. The beams (24; 30; 44; 46) and bars (28; 42) may be part of the chassis frame 11 of the bus 2. Plates or sheets may be fixed to the beams and bars in order to strengthen the chassis frame 11. Beams and bars may be tubular profiles.
The chassis frame 11, notably the wheel housing 18, may exhibit a vertical portion enclosing the first longitudinal beam 24, the second longitudinal beam 44 and the third longitudinal beam 46.
This vertical portion may be an inboard portion. It may form a barrier or a wall. The chassis frame 11, notably the wheel housing 18, may exhibit a horizontal portion enclosing the third longitudinal beam 46 and the upper longitudinal beams 30. The horizontal portion may form a top portion of the wheel housing 18. The horizontal portion may receive a seat (not represented). The third longitudinal beam 46 and the upper longitudinal beam 30 may be connected by a transversal bar (here hidden by the upper longitudinal beam).
Each wheel 8 may be linked to the wheel housing 18, respectively to the chassis frame 11, by a dedicated suspension assembly 34. Thus, the wheels 8 may oscillate between a lower position represented with dotted lines, and an upper position represented in plain lines. These positions may be respectively a first position and a second position, or a driving position and a boarding position respectively. The distance D between these positions may be measured at the summit of the wheels 8. The longitudinal distance 32 between the wheels 8 in the wheel housing 18 may be the same in the upper position and in the lower position. Each suspension assembly 34 may be encircled by one of the wheel housings 18 in order to respect compacity requirements.
Alternatively or in addition, the distance D may be measured by means of the rotation axes (9L, 9L) of the wheels 8. In the lower position, the rotation axes 9L are in lower positions, in the upper position the rotation axes 9U are in upper positions. These positions are positions of the wheels 8 with respect to the platform 12. In the lower position, the rotation axes 9L may be vertically level with the platform 12, notably within the thickness TH of the platform 12. In the upper position the rotation axes 9U may be above the platform 12. In the upper position, the upper surface of the platform, for instance the passenger floor 12F, may be at distance and below the rotation axes 9U. Thus, in the lower position of the wheels 8, the platform 12 is raised from the ground G, whereas in the upper position, the platform 12 approaches the ground G, and the ground clearance 48 reduces. The ground clearance 48, in the first position and notably in the second direction, may be larger than the thickness TH of the platform 12. The distance D between the upper position and the lower position may be greater than the vertical thickness TH, possibly the average thickness, of the passenger platform 12. The distance D may be larger than the vertical thickness TH.
This implies that the thickness TH is reduced, and that the platform is a low floor platform which eases access to the passenger compartment 49. The thickness TH may be of at most: 10 cm, or 7 cm.
The gas actuator 40 may comprise an upper bracket 50. The upper bracket 50 may be a transversal upper bracket 50. The upper bracket 50 may project transversally from one of the longitudinal beams, possibly from the third longitudinal beam 46.
As a general aspect of the invention, it may be understood that the bracket 50 is an actuator support.
A vertical bar 42 of the wheel housing 18 may cross at least one longitudinal beam, for instance the second and/or the third longitudinal beam 46. Thus, it may be considered that the corresponding longitudinal beam is segmented along the longitudinal direction L. However, the segments of the cut longitudinal beam may be aligned as in a single beam.

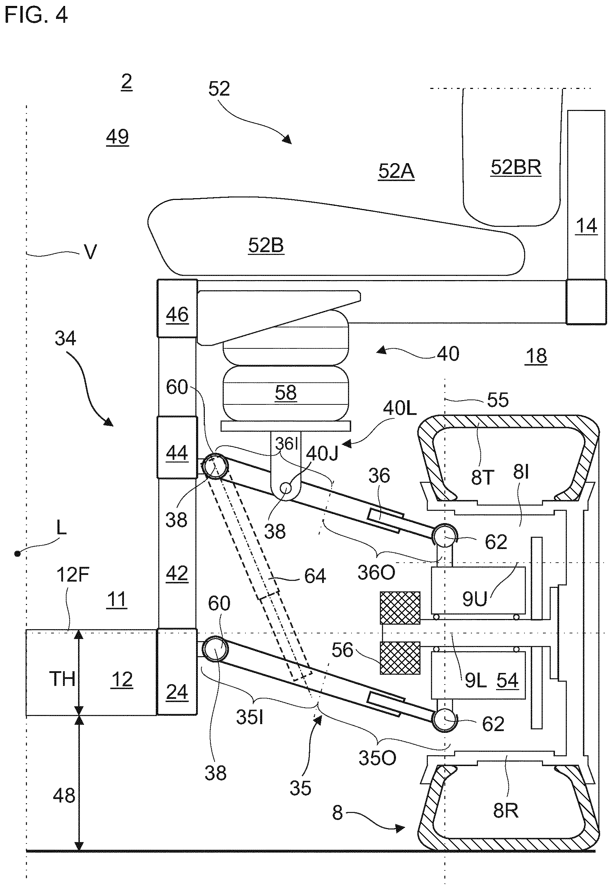

Figure 4 provides a schematic illustration of a suspension assembly 34 in accordance with a preferred embodiment of the invention. The suspension assembly 34 may correspond to the ones as described in relation with any one of figures 2 to 3. In the current figure, the wheel 8 is in the lower position. The suspension assembly 34 is in the lower configuration.

The suspension assembly 34 may be enclosed in the wheel housing 18, wherein the wheel 8 is partially contained. Thus, the ground clearance 48 is preserved, at least in the driving configuration, and the suspension assembly 34 is less exposed to protruding surfaces of the ground which could damage it.
The wheel housing 18 may support at least one seat 52, possibly a seat row of the bus 2. The wheel housing 18 may support and/or receive and/or extend along at least three or four seats 52. The seats may be identical. Each seat may comprise a seat base 52B and a back rest 52BR which may mate the side wall 14. The seat base 52B may substantially extend on the whole transversal width of the wheel housing 18. The seat 52 may generally be a seat area 52A. A seat area 52A may be adapted for receiving a seated passenger. It may have a longitudinal length comprised between 0,4 m and 1m. It may have a concave main surface, and/or rounded side edges.
At least one or each seat 52 on the wheel housing 18 may face the longitudinal centreline L of the passenger compartment 49. Thus, the current arrangement adapts technically the suspension assembly 34 to a wheel housing 18, and notably a chassis frame 11, supporting seats 52 for passengers.
The suspension assembly 34 may comprise a lower link 35. The lower link 36 may be parallel to the upper link 36. The upper and lower link (36; 35) may define a parallelogram. They may have the same transversal width. As an option, the arms (36; 35) have different longitudinal lengths. The arms (36; 35) may form a first parallelogram in the lower position (illustrated by means the rotation axis 9L) and in the upper position (illustrated by means the rotation axis 9U) of the wheel 8. The upper and lower link (36; 35) may generally be a first arm and a second arm, respectively.
The suspension assembly 34 may comprise a wheel support 54 for instance a knuckle. The wheel support 54 may be a steering knuckle. The wheel support 54 may be part of the first parallelogram. It may be joined, for instance pivotably attached, to the lower link 35 and to the upper link 36. The wheel support 54 may comprise a kingpin. The wheel support 54 may rotate about a vertical pivot axis 55 due to an actuation of a steering actuator (not represented). The wheel 8 may be rotatably fixed to the wheel support 54, and may rotate about its rotation axis 9L. The vertical pivot axis 55 may be within the wheel 8 in order to lower steering efforts, and to shorten the steering radius. The knuckle 54 may receive an engine 56 associated with the wheel 8. The engine may comprise a rotor and a stator (not represented). The engine 56 may be an electric engine 56. It may rotate the wheel 8 in order to drive the bus 2. The engine 56 may be an in-wheel engine. The engine 56 may be arranged around the rotation axis 9L of the wheel 8. It may be smaller than the rim 8R of the wheel 8. It may be arranged between the lower link 35 and the upper link 36, notably in the parallelogram that they form in order to improve compactness.
The upper link 36 may be joined to the second longitudinal beam 44, for instance by means of an upper pivot which pivots about a longitudinal pivot axis 38. The lower link 35 may be joined to the first longitudinal beam 24, for instance by means of a pivot 60 which pivots about a lower longitudinal pivot axis 38.
The suspension assembly 34 may comprise a gearbox (not represented). The gearbox may be housed in the wheel support. The gearbox may be coupled to the engine 56.
The second longitudinal beam 44 may be closer to the third longitudinal beam 46 than to the first longitudinal beam 24. Thus, the upper half of the wheel housing 18 is stiffer. In addition, the second longitudinal beam 44 provide an additional protection to passenger legs against side collisions from other vehicles. The longitudinal beams (24, 44, 46) may more generally be horizontal beams. They may be connected by at least one vertical bar 42.
The vertical thickness of the first longitudinal beam 24 may be equal or similar to the thickness TH of the passenger platform 12. The thickness TH of the passenger platform 12, and notably the vertical thickness of the first longitudinal beam 24, may be smaller than the ground clearance 48. They may be thinner than 0,1 m.
The gas actuator 40 may comprise a lower element 40L. The lower element 40L may be fixed to the upper link 38. The lower element 40L may form the lower end of the gas actuator 40. The lower element 40L and the upper link 36 may be joined through a mechanical joint 40J. The mechanical joint 40J may comprise a pivot joint or a ball joint. It may allow a pivot about a longitudinal pivot axis 38.
In the driving configuration and/or in the docking configuration where the bus is forcibly tilted toward the side of a bus stop, the altitude of the passenger floor 12F may be smaller than: 0,5 m; or 0,4 m; or 0,3m. The altitude may correspond to the addition of the ground clearance 48 and the thickness TH.
The gas actuator 40 may be vertically level with the wheel 8. They may face each other. The tire 8T of the wheel 8 may be vertically level with the lower element 40L. The wheel rotation may foster an air flow within the wheel housing 18, and thus cool the gas actuator 40. Then, the working conditions of the gas actuator may be adapted.
The gas actuator 40 may comprise a pressurized enclosure 58. The upper element and the lower element 40L may comprise a plate, possibly a horizontal plate. By varying the pressure within the pressurized enclosure 58, the height of the gas actuator 40 may be modified in order to move the wheel 8 within the wheel housing 18.
Further, the gas actuator 40 may form a spring. Then, varying the pressure allows a stiffness evolution of the corresponding spring. This aspect adapts the suspension assembly 34 to the number of passengers in the passenger compartment, or more generally to the load in the bus even under a heterogeneous load distribution.
The upper link 36 may comprise an inner half 361 and an outer half 36O. The inner half 361 and the outer half 36O may be considered transversally. They may be considered along the transversal width of the upper link 36.

The inner half 36I may be joined to the wheel housing, notably to the second longitudinal beam 44, by means of a pivot joint 60 which pivots about the longitudinal pivot axis 38 and which is fixed to the second longitudinal beam 44. The outer half 36O may be joined to the wheel support 54, possibly through an outer mechanical joint 62. A pivot joint and/or ball joint may form said outer mechanical joint 62.
The gas actuator 40 may be connected to the upper link 36 at a location within the inner half 361 of said upper link 36. More precisely, the mechanical joint 40J may be arranged within, and/or in contact of the inner half 361. Notably transversally, the mechanical joint 40J may be closer to the pivot joint 60 than to the outer mechanical joints 62 of the upper link 36.
The lower link 35 may be connected to the wheel housing 18 and to the knuckle 54 by a similar pivot joint 60 fixed to the first longitudinal beam 24 and a similar outer mechanical joint 62. The outer mechanical joints 62 may define the vertical pivot axis 55 about which the knuckle 54, and by way of consequence the wheel 8, is steered.
The suspension assembly 34 may comprise a damping device 64. The damping device 64 may be separate and distinct from the gas actuator 40. The damping device 64 may be adapted for absorbing vibrations transmitted by the wheel 8 to the chassis frame 11 of the bus structure. It may convert mechanical energy into thermal energy. The damping device 64 may be inclined with respect to gas actuator 40, notably in the upper and in the lower position. The damping device 64 may exhibit a center line inclined with respect to the center line of the gas actuator, notably in the upper and in the lower position. The center lines may be lines along which the corresponding actuator or system works. Thus, the kinematics are different, and the mechanical resistances show different progressions in function of the inclination of the arms with respect the passenger platform 12. The lower link 35 may comprise an inner half 351 and an outer half 35O. The damping device 64 may be joined to the inner half 35I of the lower link 35.
The damping device 64 may be joined to the lower link 35. It may be at distance from the gas actuator 40. The upper end of the damping device 64 may be joined to the second longitudinal beam 44. As an option, the damping device 64 is joined to the upper pivot joint 60 of the upper link 36. Thus, the upper link 36 may connect the damping device 64 to the gas actuator 40. The damping device 64 may extend on the whole vertical thickness of the parallelogram defined by the links (35; 36). Thus, the use of the space in said parallelogram is optimised. The stroke and the inclination of the damping device 64 may be adapted to the cinematic of the parallelogram.
The upper end of the damping device 64 may be joined to the chassis frame 11. The longitudinal pivot axis 38 of the upper link 38 may project through the damping device 64, which implies that the suspension assembly 34 is compact. In addition, the position of the damping device 64 with regard to the pivot axis 38 implies that its motions from above are reduced.
The damping device 64 and the gas actuator 40 may be arranged above one another. They may be transversally at distance from each other. A transversal separation may be arranged between the damping device 64 and the gas actuator 40. This separation may extend along the whole interface between the damping device 64 and the gas actuator 40.
The lower link 35 may comprise a portion of reduced thickness and two transversal branches, at least one of the two transversal branches being vertically thicker than the portion of reduced thickness and joining transversally a portion of reduced thickness to the damping device 64.
The upper link 36 may comprise a portion of reduced thickness and two transversal branches, the transversal branches being vertically thicker than the portion of reduced thickness.
The lower link 35 and the upper link 36 may be mirrored. They may be similar or identical.
The transversal branches of the lower link 35 may be identical to the transversal branches of the upper link 36. The portion of reduced thickness of the lower link 35 may be identical to the portion of reduced thickness of the upper link 36. Their outer mechanical joints 62 may be identical. A same link model may be used for the upper one and for the lower one. Then an economy of scale is allowed. This advantage is offered whereas the links are coupled to different devices, namely the damping device 64 and the gas actuator 40.
The rim 8 surrounds an inner space 81 in the wheel 8. The inner space 81 in the rim 8R may receive the portion or reduced thickness of the lower link 35 and/or of the upper ling 36. These portions of reduced thickness may be partially in the inner space 81. They may be encircled by the rim 8R.

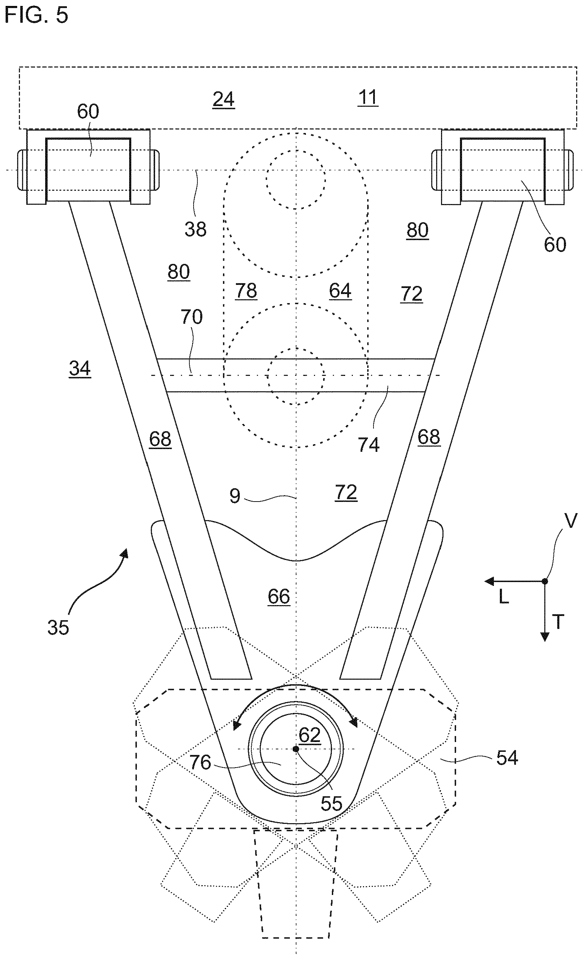

Figure 5 shows an aerial view of a suspension assembly 34 in a preferred embodiment of the invention. The damping device 64 is represented in dotted lines for the sake of clarity. A portion of the chassis frame 11 is also represented in dotted lines for the same purpose. The represented portion of the chassis frame 11 may correspond to a longitudinal beam 24. The transversal direction T, the longitudinal direction L and the vertical direction V are provided. These directions (T, L, V) may be perpendicular to each other.
The suspension assembly 34 may correspond to the one as described in relation with anyone of figures 2 to 4.
The lower link 35 may comprise a portion a portion of reduced thickness 66. The portion of reduced thickness 66 may comprise a plate. The plate may be solid. The portion of reduced thickness 66 may be flat. The portion of reduced thickness 66 may have a constant vertical thickness. The portion of reduced thickness 66 may form the outer transversal end of the lower link 35. It may receive the outer mechanical joint 62, for instance therethrough. The portion of reduced thickness 66 may be arranged below the wheel support 54.
The lower link 35 may comprise transversal branches 68. The transversal branches 68 may be inclined with respect to each other, for instance of an angle of at least 10°. The transversal branches 68 may be inclined with respect to the rotation axis 9 and notably to the transversal direction T. The transversal branches 68 may be symmetric with respect to the rotation axis 9 when the latter is aligned with the transversal direction T. The transversal branches 68 may be rods, for instance hollow rods as tubes.
Each transversal branch 68 may join the portion of reduced thickness 66 to the chassis frame 11; respectively the longitudinal beam 24. The pivot joints 60 at the inner, or inboard, ends of the transversal branches 68 may comprise yokes, or forks, fixed to the chassis frame 11. Then the transversal branches 68, and thus the whole lower link 35 may pivot about the longitudinal pivot axis 38.
The lower link 35 may comprise a recess between the transversal branches 68. The lower link 35 may comprise at least one vertical passage 72 between the transversal branches 68. The at least one vertical passage 72 may correspond to the recess. The vertical passage(s) 72 may cross vertically the lower link 35. The vertical passage(s) 72 may communicate from the upper face of the lower link 35 to its lower face. It may be delimited by the portion of reduced thickness 66 and/or by the chassis frame 11. It may extend all along the transversal branches 68.
At least one or the two transversal branches 68 may be transversally longer than the portion of reduced thickness 66, for instance at least: two or three times longer. The portion of reduced thickness 66 may be longitudinally thicker than at least one or each of the two transversal branches 68, for instance at least: three or five times thicker. Thus, this configuration optimises the stiffness and the lightness.
The damping device 64 may comprise lower fixation means 74. The lower fixation means 74 may comprise a fixation axis projecting longitudinally. They may comprise a longitudinal link, for instance linked to the transversal branches 68. The lower fixation means 74 may be fixed to at least one or to each of the transversal branches 68. The lower fixation means 74 may comprise a pivot axis 70 about which the damping device 64 may pivot with respect to the lower link 35. The lower fixation means 74 may cross longitudinally the vertical passage 72. The lower fixation means 74 may divide transversally the vertical passage 72.
The portion of reduced thickness 66 and the wheel support 54 may be joined by an outer mechanical joint 62. The outer mechanical joint 62 may be a ball joint 76. The ball joint 76 may be arranged within the portion of reduced thickness 66, notably at distance from the transversal branches 68. Thus, more space is provided to the wheel support 54 for pivoting about the vertical pivot axis 55.
The damping device 64 may comprise a tubular body 78. The damping device 64 may be a gas damper or an oil damper. The damping device 64 may be adapted for absorbing shocks from the road and transmitted by the wheel during driving. It may be adapted for resisting to its compression or rebound motions. It may generate a resisting effort which is proportional to its elongation variation speed.
The suspension assembly 34 may comprises a hollow space 80 around the damping device 64. The hollow space 80 may extend at least on the half of the height of said damping device 64, possibly substantially the whole height. The hollow space 80 may extend vertically from the transversal branches 68, possibly up to the upper link (not represented). The hollow space 80 may extend transversally from the chassis frame 11. The hollow space 80 may project on the whole longitudinal length of the lower link 35.
The upper arm (not represented) may be similar or identical to the lower link 35. They may comprise identical portions of reduced thickness 66. They may comprise identical transversal branches 68. They may comprise identical ball joints. They may comprise similar or identical vertical passages 72. The engine (not represented) may extend longitudinally between the transversal branches 68.

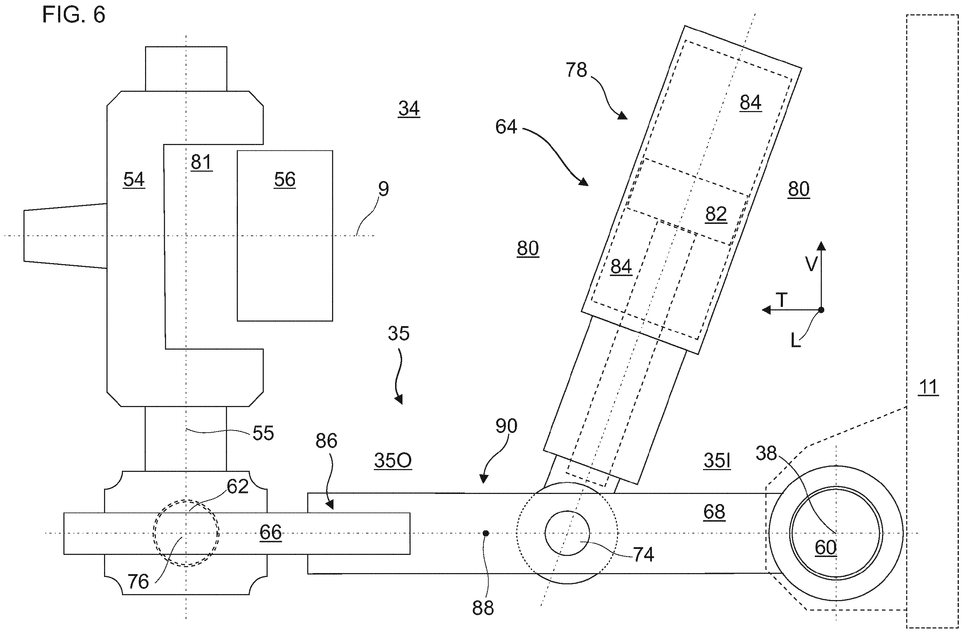

Figure 6 shows a longitudinal view of a suspension assembly 34 in a preferred embodiment of the invention. The damping device 64 is represented in dotted lines for the sake of clarity. A portion of the chassis frame 11 is also represented in dotted lines for the same reasons. The transversal direction T, the longitudinal direction L and the vertical direction V are provided. These directions (T, L, V) may be perpendicular to each other.
The suspension assembly 34 in the current embodiment may correspond to the one as described in relation with anyone of figures 2 to 5.
The portion of reduced thickness 66 and the wheel support 54 may be pivotably connected through an outer mechanical joint 62. The outer mechanical joint 62 may comprise a ball joint 76. A ball joint may be understood as a joint allowing rotation about three perpendicular axes. The ball joint 76 may be disposed through the thickness of the portion of reduced thickness 66. It may comprise a body which crosses vertically the portion of reduced thickness 66. The vertical pivot axis 55 may be through the ball joint 76.
The portion of reduced thickness 66 may be transversally shorter than at least one, or each of the two transversal branches 68, notably at least two times shorter. The vertical thickness of at least one or of each transversal branche 68 represent at least: 150%, or 200%, of the vertical thickness of the portion of reduced thickness 66. The considered thickness of the portion 66 may be its average thickness. It may be the thickness of the plate forming said portion 66.
The suspension assembly may comprise an electric engine 56. The electric engine 56 may be arranged in a recess 81 of the wheel support 54. The electric engine 56 may be adapted for rotating the corresponding wheel (not represented) about a transversal rotation axis 9. It may participate to drive the bus.
The electric engine 56 may be an in-wheel engine. It may have a rotation axis which matches that of the wheel in order to improve compactness. The electric engine 56 may be vertically level with the damping device 64. They may face each other transversally. The portion of reduced thickness 66 may overlap partially transversally thee electric engine 56. The transversal branches 68 may be vertically, and notably transversally at distance from the electric engine 56.

By way of example, the bus may comprise eight or sixteen wheels. Then, the bus may be driven by respectively, the eight or sixteen corresponding electric engines 56.
The damping device 64 may comprise lower fixation means 74 joined to the transversal branches 68. The lower fixation means 74 may be arranged in the thickness of said transversal branches 68. Along the transversal direction T, the lower link 35 may comprises an outer half 35O joined to the wheel support 54, and an inner half 35I joined to the damping device 64. The inner half 351 may be joined to the chassis frame 11 by means of the pivot joints 60 which oscillate about the longitudinal pivot axis 38. The inner half 35I may be formed totally by the transversal branches 68, and optionally with the pivot joints 60 which are part of said transversal branches 68.
The damping device 64 may comprises a tubular body 78. It may be a gas damper or an oil damper. It may comprise a piston 82 which travels in a chamber 84 containing a damping medium (not represented) such as oil or gas. Such damping medium is well known from the skilled in the art and will not be discussed further. The flow of the damping medium through the piston 82 may brake the compression and the detent of the damping device 64.
The transversal branches 68 may comprise notches 86, for instance transversal notches 86, in which the portion of reduced thickness 66 is fixed. Thus, the portion 66 and the transversal branches 68 overlap each other along the transversal notches 86. Transversally, the lower link 35 may comprise a center 88 and a central segment 90 at said center 88. The center 88 may be the middle point. The central segment 90 may extend on at most; and/or at least; the half or the third of transversal length of the lower link 35. The central segment 90 may exhibit a constant thickness. The portion of reduced thickness 66 and the transversal branches 68 may overlap each other in said central portion 90, which optimise the flexion stiffness of the lower link 35.
The suspension assembly 34 may comprises a hollow space 80 around the damping device 64. The damping device 64 may project through said hollow space 80. The latter may extend at least on the half of the height of the damping device 64, or along its whole height. The hollow space 80 may be disposed vertically between the upper link (not represented), and the lower link 35. It may be transversally between the chassis frame 11 and the wheel support 54. The hollow space 80 may be vertically level with the wheel (not represented).
Then the arrangement of the damping device 64 within its hollow space 80 fosters cooling.

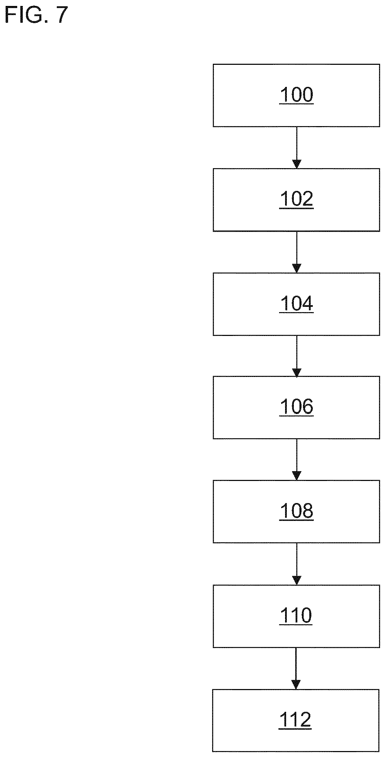

Figure 7 provides a schematic illustration of a bus assembling process, for instance with a suspension assembly. The suspension assembly may correspond to the ones as described in relation of any one of figures 2 to 6. The bus may correspond to the ones as deduced from any of figures 1 to 6. More generally, the bus assembling process may be a suspension assembly assembling process.
The process may comprise the following steps, for instance in the following order:
- providing 100 or manufacturing a chassis frame of the bus,
- joining 102 an upper link to the chassis frame;
- providing 104 a wheel support,
- joining 106 a damping device to the chassis frame;
- providing 108 a lower link comprising, along a transversal direction, two transversal branches and a portion of reduced thickness which is vertically thinner than each of the transversal branches,
- joining 110 the chassis frame to the wheel support and to the damping device through the portion of reduced thickness and the branches respectively;
- joining 112 a wheel on the wheel support.
At the end or during step joining 110, the wheel support is joined to the portion of reduced thickness before the damping device is joined to one of the two transversal branches, or to each of the two transversal branches.
The damping device and the upper link may be joined to the chassis frame before the wheel support is joined to the upper link and to the lower link, for instance during step joining 106 a damping device, and/or during step joining 102.
The damping device and the upper link may be joined to the chassis frame at the same time and/or together, for instance during step joining 106 a damping device, and/or during step joining 102. The damping device and the upper link may be physically in contact of the chassis frame, for instance through the pivot joints with longitudinal pivot axes.

It has been observed the portions of reduced thickness eases access to the damping device during assembly. Then, a faster and easier assembly is allowed. Besides this, inspection and maintenance are safer since removing the attached wheel, and optionally the wheel support, opens a wide lateral view on the damping device.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A bus (2) comprising a suspension assembly (34), the suspension assembly (34) including:
a transversal direction T,
a transversal wheel rotation axis (9),
a wheel support (54) for a wheel (8),
an upper link (36) pivotably joined to the wheel support (54),
a damping device (64) adapted for absorbing energy,
a lower link (35) comprising a portion of reduced thickness (66) and two transversal branches (68), at least one of the two transversal branches (68) being vertically thicker than the portion of reduced thickness (66) and joining transversally the portion of reduced thickness (66) to the damping device (64).

2. The bus (2) according to claim 1, wherein the upper link (36) comprises a longitudinal pivot axis (38) which is across the damping device (64), preferably the damping device (64) comprises an upper joint through which said longitudinal pivot axis (38) is disposed.

3. The bus (2) according to any of claims 1 to 2, wherein each of the two transversal branches (68) is transversally longer than the portion of reduced thickness (66), and the portion of reduced thickness (66) is longitudinally thicker than each of the two transversal branches (68).

4. The bus (2) according to any of claims 1 to 3, wherein the suspension assembly (34) comprises a wheel (8) with a rim (8R) comprising an inner space (81) in which the portion of reduced thickness (66) is, at least partially, disposed, optionally the portion of reduced thickness (66) protrudes from the inner space (81).

5. The bus (2) according to any of claims 1 to 4, wherein the suspension assembly (34) comprises an electric engine (56) adapted for rotating the wheel (8) about the transversal wheel rotation axis (9), said electric engine (56) being vertically level with the damping device (64), the electric engine (56) notably being an in-wheel engine.

6. The bus (2) according to claim 5, wherein the portion of reduced thickness (66) extends transversally along the whole electric engine (56).

7. The bus (2) according to any of claims 1 to 6, wherein the damping device (64) comprises lower fixation means (74), and the portion of reduced thickness (66) and the wheel support (54) are joined by a ball joint (76) disposed through the portion of reduced thickness (66).

8. The bus (2) according to any of claims 1 to 7, wherein the lower link (35) comprises an outer half (35O) joined to the wheel support (54), and an inner half (351) joined to the damping device (64), said inner half (351) being formed by the transversal branches (68), the electric engine notably extending along the outer half (350).

9. The bus (2) according to any of claims 1 to 8, wherein the transversal branches (68) comprise notches (86) in which the portion of reduced thickness (66) is fixed, the lower link (35) comprises a center (88) and a central segment (90) at said center (88) which extends on at least the half of the lower link (35), the portion of reduced thickness (66) and the transversal branches (68) overlapping each other in said central segment (90).

10. The bus (2) according to any of claims 1 to 9, wherein the suspension assembly (34) comprises a gas spring, notably a gas actuator (40), which is joined to the upper link (36), the suspension assembly (34) comprises a separation, notably a transversal separation, between the gas spring, respectively the gas actuator (40), and the damping device (64), the upper arm forming a connection joining the gas spring to the damping device (64).

11. The bus (2) according to any of claims 1 to 10, wherein the upper link (36) comprises an upper portion of reduced thickness to which the wheel support (54) is pivotably linked, and two upper transversal branches extending from the upper portion of reduced thickness (66), the upper link (36) and the lower link (35) defining a parallelogram.

12. The bus (2) according to any of claims 1 to 11, wherein the suspension assembly (34) is configured such that the transversal wheel rotation axis (9) is movable, at least, between an upper position and a lower position with respect to the chassis frame (11); preferably the bus (2) comprises several units (4) with similar or identical suspension assemblies (34).

13. The bus (2) according to any of claims 1 to 12, wherein the suspension assembly (34) is a first suspension assembly, the bus (2) further comprising a second suspension assembly (34), and a passenger platform (12) between the first suspension assembly and the second suspension assembly (34) which extends transversally over at least the half of the width of the bus (2).

14. A bus assembling process, the bus (2) notably being a low platform bus, the bus assembling process comprising the steps of:
providing (100) a chassis frame (11) for the bus (2),
joining (102) an upper link (36) to the chassis frame;
providing (104) a wheel support (54),
joining (106) a damping device (64) to the chassis frame (11);
providing (108) a lower link (35) comprising two transversal branches (68) and a portion of reduced thickness (66) which is thinner than the transversal branches (68),
joining (110) the chassis frame (11) to the wheel support (54) and the damping device (64) through the portion of reduced thickness (66) and the transversal branches (68) respectively;
the bus notably being in accordance with any one of claims 1 to 13.

15. The bus assembling process according to claim 14, wherein the damping device (64) and the upper link (36) are joined to the chassis frame (11) before the wheel support (54) is joined to the upper link (36) and the lower link (35), and the damping device (64) and the upper link (36) are joined to the chassis frame (11) at the same time.
